Europäisches Patentamt

European Patent Office

Office européen des brevets

(11) Numéro de publication: **0 077 270**
**B1**

(12) **FASCICULE DE BREVET EUROPEEN**

(45) Date de publication du fascicule du brevet: **20.07.88**

(21) Numéro de dépôt: **82401851.9**

(22) Date de dépôt: **08.10.82**

(51) Int. Cl.⁴: **A 01 M 7/00**

(54) **Procédé de stabilisation par rapport à une trajectoire recherchée d'un élément monté mobile selon au moins une composante de mouvement et son application à la stabilisation d'une rampe pulvérisatrice.**

(30) Priorité: **09.10.81 FR 8119099**

(43) Date de publication de la demande:
**20.04.83 Bulletin 83/16**

(45) Mention de la délivrance du brevet:
**20.07.88 Bulletin 88/29**

(84) Etats contractants désignés:
**AT BE CH DE FR GB IT LI LU NL SE**

(56) Documents cités:
**FR-A-2 039 058**
**FR-A-2 431 255**
**FR-A-2 460 438**
**GB-A-1 042 932**
**GB-A-2 025 665**

(73) Titulaire: **CENTRE NATIONAL DU MACHINISME AGRICOLE, DU GENIE RURAL, DES EAUX ET DES FORETS (CEMAGREF)**
**Parc de Tourvoie**
**F-92160 Antony (FR)**

(72) Inventeur: **Gille, Etienne**
**Parc de Tourvoie**
**F-92160 Antony (FR)**
Inventeur: **Lucas, Jean**
**Parc de Tourvoie**
**F-92160 Antony (FR)**
Inventeur: **Mechineau, Didier**
**Parc de Tourvoie**
**F-92160 Antony (FR)**
Inventeur: **Monod née Villard, Marie-Odile**
**Parc de Tourvoie**
**F-92160 Antony (FR)**

(74) Mandataire: **Lemonnier, André**
**4 Boulevard Saint-Denis**
**F-75010 Paris (FR)**

Courier Press, Leamington Spa, England.

## Description

La présente invention a pour but de stabiliser par rapport à une trajectoire recherchée la position d'un élément monté mobile selon au moins une composante de mouvement participant à la formation de la trajectoire réelle sur un ou des points d'appui suivant une trajectoire rendant possible le suivi par le mobile de la trajectoire recherchée, ce montage assurant une liberté de mouvement suivant la ou les composants de mouvement participant à la formation de la trajectoire. Par liberté de mouvement, on entend que le mobile n'est soumis relativement à la composante de mouvement considérée à aucune force de rappel d'intensité notable vers une position particulière, le mobile tendant à conserver par inertie la position qu'il occupe, ou le mouvement qu'il a, relativement à la composante de mouvement. La liberté de mouvement peut avoir la nature d'une translation ou d'une rotation. Les libertés de mouvement peuvent être combinées par rapport à la trajectoire recherchée. Une liberté de mouvement de rotation simple peut être la rotation libre autour d'un axe, par exemple l'inclinaison transversale d'une rampe pulvérisatrice autour d'un axe longitudinal du châssis porteur et en particulier un axe longitudinal passant par le centre de gravité de la rampe. Une liberté de mouvement de rotation double peut être la combinaison de deux rotations libres autour de deux axes transversaux, par exemple la libre rotation (avec équilibrage des masses) autour d'un axe transversal normal à l'essieu et à l'axe longitudinal du châssis porteur, de l'axe longitudinal ci-dessus portant la rampe pulvérisatrice afin de rendre sa position indépendante des variations de cap du châssis porteur. Une liberté de mouvement de rotation triple peut être la rotation libre d'une tourelle d'engin suspendue à cardan sur son châssis par des axes longitudinal et transversal avec une possibilité de rotation sans frottement autour de l'axe vertical. Une liberté de mouvement de translation peut être une liberté de translation verticale, par exemple dans le cas d'un mobile suspendu d'une façon quasi infiniment souple sur un élément porteur, tel que, par exemple, une suspension hydropneumatique avec accumulateur de grand volume, ou une liberté de translation transversale ou longitudinale par rapport à un châssis porteur pour éviter la répercussion d'impulsions transversales ou longitudinales du châssis porteur sur le mobile porté par ledit châssis, par exemple par l'intermédiaire de galets de roulement. Ces trois libertés de mouvement de translation peuvent bien évidemment être combinées entre elles et avec les trois libertés de mouvement de rotation de toute manière voulue et en un nombre quelconque. Cette définition fait clairement apparaitre que les suspensions élastiques qui tendent à ramener le mobile suspendu, avec une force fonction de l'écart du mobile par rapport à une position définie dans ladite position définie par rapport à son support et à fortiori les liaisons rigides, n'assurent pas un montage avec liberté de mouvement du type concerné par l'invention. Par contre il y a liberté de mouvement dans le cas d'une suspension élastique infiniment souple comme exposé ci-dessus ou d'un couple constant en valeur et direction parce que les intensités des forces exercées·sur le mobile sont indépendantes de la position du mobile par rapport aux points d'appui.

Par "trajectoire" on entend la succession dans le temps des positions du mobile par rapport à la ou aux composantes de mouvement selon lesquelles il est mobile. La trajectoire peut ainsi être définie comme une position horizontale ou d'inclinaison donnée, une hauteur constante ou variable, etc., les composantes de définition d'une "trajectoire" simple pouvant être combinées par exemple une position horizontale et une hauteur constante.

La "trajectoire" recherchée est définie par rapport à une référence matérielle qui peut être quelconque, artificielle ou naturelle, par rapport à laquelle les variations de la position du mobile qui doit être stabilisé peuvent être connues en grandeur et en signe, par mesure, détection ou calcul.

La référence matérielle peut être la surface du sol sur laquelle se déplacent les éléments porteurs dans le cas de la stabilisation de l'inclinaison transversale d'une rampe pulvérisatrice ou de la stabilisation en hauteur d'un mobile suspendu d'une façon quasi infiniment souple, un horizon ou un cap artificiels matérialisés par clinomètre ou gyroscope ou un repère de pointage en direction dans le cas d'une liberté de rotation double ou triple pour stabiliser une ou plusieurs des positions.

On connaît déjà des procédés de stabilisation en position horizontale, en hauteur, en inclinaison ou en orientation de mobiles suspendu sur un ou plusieurs appuis solides. Un tel procédé de stabilisation appliqué à une rampe de pulvérisation est décrit par exemple dans le brevet Grande-Bretagne N° 2.025.665 qui révèle les caractéristiques techniques du préambule de la revendication 1. Dans ce brevet la rampe est montée sur ses appuis, à savoir le châssis roulant sur le sol, par une suspension. Des forces tendent à rétablir le parallélisme entre la rampe et le plan des supportes, même si la rampe est, à ce moment précis, parallèle au sol. Cette rampe est montée pivotante autour d'un axe horizontal solidaire du corps central et sa particularité réside dans le fait qu'au lieu de moyens élastiques ou d'une force de rappel combinant la gravité et un axe d'articulation situé au-dessus du centre de gravité, ce sont des moyens, asservis à des détecteurs de position comparant les distances au sol de deux points de la rampe, qui agissent entre la rampe et le corps principal pour modifier la position de la rampe par rapport à ce corps principal et partant par rapport au sol, le corps principal étant stabilisé en position par rapport aux appuis par la suspension. Dans ce brevet les moyens asservis modifient positivement la position relative de la rampe par rapport au corps principal suspendu en fonction de la position de la rampe par rapport à la trajectoire recherchée. Il s'agit d'un dispositif de modification de la position d'équilibre du mouvement d'oscillation de la rampe par rapport à la suspension dans lequel on applique à la rampe et en fonction de sa position par rapport à l'horizontale une force tendant à ramener la rampe dans sa position horizontale, cette force étant fonction de l'écart entre la position de la rampe et la position horizontale.

Le brevet français N° 2.431.255 décrit un dispositif avec réglage, non plus en horizontalité, mais selon la direction perpendiculaire à la surface du sol, de la position d'une rampe, ce réglage ayant lieu en fonction de la pression de pulvérisation. Dans ce brevet la rampe n'est pas montée avec une liberté de mouvement puisque la hauteur est réglée positivement par un vérin double effet.

Le procédé conforme à l'invention a pour but de stabiliser par rapport à une trajectoire recherchée, un mobile monté sur des points d'appui avec au moins une liberté de mouvement, les points d'appui suivant une trajectoire rendant possible le suivi par le mobile de la trajectoire recherchée, en fonction des écarts de position par rapport à cette trajectoire recherchée repérée par rapport à une référence matérielle, en éliminant l'influence des irrégularités de la trajectoire suivie par le ou les points d'appui, influence que l'on ne peut éviter dans le cas des suspensions élastiques et encore plus des liaisons rigides.

Dans le procédé conforme à l'invention pour faire suivre à un élément monté mobile selon au moins une composante de mouvement, sur un support se déplaçant lui-même dans un repère fixe, une trajectoire recherchée définie dans ce repère fixe, procédé dans lequel on exerce, sur l'élément et en fonction de sa position par rapport à la trajectoire recherchée, une ou des forces tendant à ramener l'élément sur la trajectoire recherchée, cette ou ces forces étant fonction de l'écart entre la position de l'élément et la position correspondant à la trajectoire recherchée, l'élément est monté dans une position d'équilibre indifférent par rapport à la ou aux composantes de mouvement selon lesquelles il est monté mobile sur le support et les forces qui tendent à ramener l'élément sur la trajectoire recherchée ont des intensités indépendantes de la position relative et des mouvements relatifs de l'élément par rapport au support, ces forces qui suppriment l'état d'équilibre indifférent de l'élément n'étant appliquées que lors de la détection d'un écart entre la position de l'élément et la position correspondant à la trajectoire recherchée.

Selon une autre caractéristique de l'invention, la ou les forces qui tendent à ramener l'élément sur la trajectoire recherchée sont des forces d'intensité quasi-constante dont la durée de mise en application est fonction de l'action à exercer sur l'élément pour le ramener sur la trajectoire recherchée.

La présente invention a également pour objet un dispositif comportant un élément monté mobile selon au moins une composante de mouvement sur un support se déplaçant lui-même selon une trajectoire rendant possible le suivi par l'élément de la trajectoire recherchée pour cet élément, ce dispositif comportant en combinaison et pour chaque composante de mouvement participant à la formation de la trajectoire réelle au moins un moyen de mesure de la position instantanée, selon la direction de ladite composante de mouvement, de l'élément par rapport à un élément de référence indépendant du dispositif, une calculatrice programmée qui reçoit des valeurs mesurée de ladite position instantanée, les compare aux valeurs théoriques correspondant à la trajectoire recherchée pour l'élément et émet une sortie fonction du résultat de cette comparaison et un moyen monté entre l'élément et le support et susceptible d'exercer sur l'élément une force tendant à modifier sa position selon la direction du mouvement de ladite composante de mouvement, un moyen asservi à la sortie émise par la calculatrice mettant en action, en fonction de ladite sortie, ce moyen exerçant une force, ce dispositif étant caractérisé en ce que l'élément est monté dans une position d'équilibre indifférent selon une ou des composantes de mouvement participant à la formation de la trajectoire réelle, le moyen n'exerçant une force sur l'élément mobile que lorsque la calculatrice envoie au moyen asservi un signal de commande correspondant à un écart entre la position de l'élément et la position correspondant à la trajectoire recherchée.

Selon une application pratique à une rampe pulvérisatrice montée à rotation libre autour d'un axe porté par le châssis porteur de la rampe, ledit dispositif comportant au moins un détecteur susceptible de mesurer la distance à laquelle il se trouve de la surface à pulvériser, ledit détecteur étant monté sur ladite rampe en étant écarté du plan longitudinal de la rampe passant par son axe d'articulation, les mesures de ce ou ces détecteurs étant envoyées à une calculatrice programmée qui effectue la comparaison des valeurs de distance mesurées aux valeurs théoriques correspondant au parallélisme de la rampe pulvérisatrice avec la surface à pulvériser et émet un signal de commande fonction du résultat de cette comparaison, un moyen étant asservi audit signal de commande pour rendre actif le moyen susceptible d'exercer un couple sur ladite rampe pour la faire tourner autour de l'axe, application dans laquelle l'axe passe sensiblement par le centre de gravité de la rampe, le moyen laissant la rampe libre d'osciller librement en dehors des périodes pendant lesquelles elle est soumise à l'action du moyen susceptible d'exercer un couple sur ladite rampe.

Le moyen susceptible d'exercer un couple sur la rampe est constitué par un vérin double effet articulé sur la rampe et sur le châssis porteur et associé à une source de fluide sous pression, le moyen asservi au signal de commande étant un distributeur à trois positions assurant, dans deux des positions, la mise en communication de la source de fluide sous pression avec l'une ou l'autre des chambres du vérin, avec cette caractéristique conforme à l'invention que, dans la troisième position, le distributeur assure l'intercommunication entre les deux chambres du vérin.

Selon un autre mode de réalisation, le moyen susceptible d'exercer un couple sur la rampe est constitué par un moteur électrique à excitation séparée monté sur le châssis porteur et dont l'arbre de sortie entraine la rampe autour de son axe, le moyen asservi à la commande étant un dispositif de régulation de l'excitation de ce moteur.

L'application du procédé de stabilisation de l'invention à une rampe pulvérisatrice agricole sera décrite plus en détail ci-après sous forme de deux exemples de réalisation avec référence au dessin ci-annexé dans lequel:

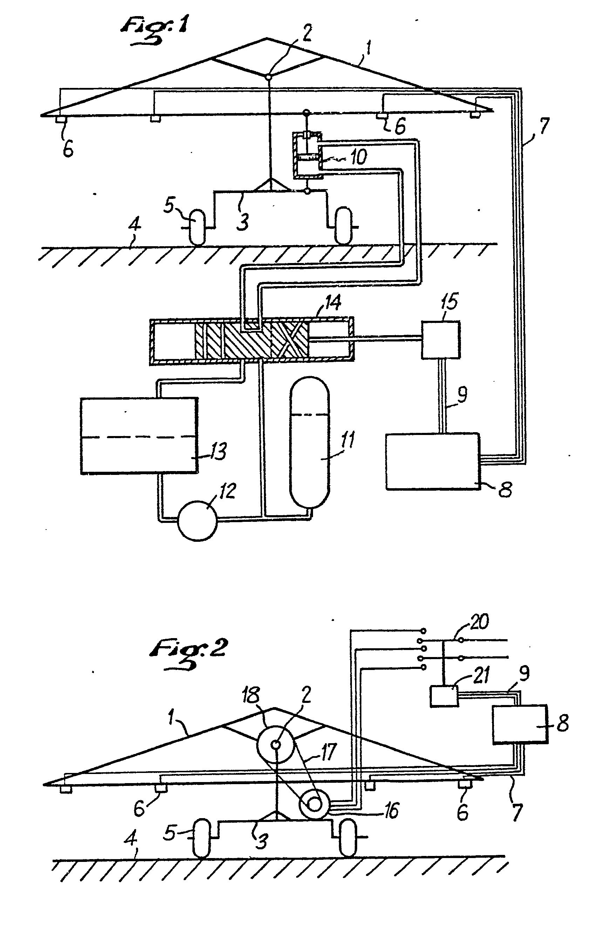

La figure 1 est un schéma explicatif d'un dispositif de stabilisation utilisant un vérin double effet contrôlé par un distributeur à trois positions et la figure 2 est un schéma analogue mettant en oeuvre un moteur électrique à excitation séparée avec un contacteur-inverseur à trois positions.

Dans les deux figures, la rampe a été schématisée par son balancier à deux bras 1 portant de la manière connue les buses de pulvérisation (non représentées) et monté à rotation libre autour d'un axe 2 passant par son centre de gravité. Cet axe 2 est un axe longitudinal porté par le châssis porteur 3 qui roule sur le sol 4 par des roues 5. Sous l'influence des inégalités du sol, des variations de pente transversale et des forces extérieures telles que, par exemple, le vent, une telle rampe qui peut atteindre une très grande longueur et qui est en général suspendue à rotation libre autour d'un axe passant au-dessus de son centre de gravité pour créer une force de rappel en position, tend à ne plus être parallèle au sol, c'est-à-dire à la surface des cultures à pulvériser et elle peut prendre un mouvement d'oscillation susceptible d'amener ses extrémités à heurter le sol et qui, dans tous les cas, perturbe la régularité de la pulvérisation. L'invention permet, dans l'application particulière à une telle rampe de pulvérisation, de maintenir la rampe parallèle au sol ou à la surface à pulvériser de la culture qui constitue la référence matérielle par rapport à laquelle est stabilisée la trajectoire de la rampe qui constitue un mobile à une liberté de mouvement (rotation libre autour de l'axe 2).

Conformément à l'invention, on monte sur la rampe des détecteurs 6 susceptibles de mesurer la distance les séparant de la référence matérielle, c'est-à-dire de la surface à pulvériser et par exemple des groupes émetteurs-récepteurs d'ultra-sons. Les résultats des mesures sont envoyés par un câble 7 à une calculatrice 8. Cette calculatrice est programmée pour effectuer une moyenne pondérée de ces mesures. Selon la précision de la stabilisation que l'on désire obtenir, on choisit une loi de pondération parmi celles connues. Dans la pratique, cette loi de pondération élimine au moins les valeurs aberrantes parmi les valeurs mesurées simultanément par les détecteurs répartis dans l'espace, à savoir le long de la rampe, ces valeurs résultant de la présence "d'accidents" dans la surface détectée au droit d'un détecteur ou d'un mauvais fonctionnement de ce dernier. En pratique on choisit également une loi de pondération combinant une pluralité de mesures réparties dans le temps pour éliminer les valeurs aberrantes, les écarts de position faibles ou de courte durée et plus généralement les mesures qui ne correspondent pas à un état nécessitant une correction de la trajectoire. La loi de pondération peut également tenir compte des dérivés mathématiques de la valeur moyenne mesurée pour déterminer l'importance de l'écart entre la position réelle de la rampe et la position recherchée, le sens et la vitesse de la variation de cet écart.

En fonction du résultat de ces calculs et des valeurs mises en mémoire des caractéristiques du mobile suspendu notamment de son inertie, la calculatrice programmée détermine les caractéristiques de l'effort à appliquer au mobile et notamment le sens et la durée d'application lorsqu'il s'agit d'une force d'intensité préfixée. Le résultat, sous forme d'un signal de commande, est transmis par un câble 9.

Dans le mode de réalisation de la figure 1, l'effort pour ramener la rampe 1 dans la position recherchée est exercé par un vérin à double effet 10, par exemple un vérin hydraulique. Ce vérin hydraulique est articulé entre un point de la rampe 1 et un point du châssis porteur 3 qui sont écartés latéralement du plan longitudinal du châssis porteur passant par l'axe 2 de manière que le vérin 10 puisse exercer un couple tendant à faire tourner la rampe 1 autour de l'axe 2. Ce vérin 10 est alimenté par un accumulateur 11 mis et maintenu en pression de toute manière connue, par exemple par une pompe 12 reprenant l'huile dans la bâche 13. L'alimentation du vérin 10 est contrôlée par un distributeur à trois positions 14 dont l'organe de commande 15 est commandé par les signaux transmis par le câble 9. La position neutre du distributeur assure, selon une caractéristique de l'invention, l'intercommunication entre les deux chambres du vérin 10. Dans cette position, (le volume de la tige du piston étant compensé d'une manière connue) le vérin n'exerce aucun effet et la liberté de mouvement de la rampe 1 autour de l'axe 2 n'est pratiquement pas affectée. Par contre les signaux de commande, émis temporairement et en fonction du résultat du calcul, par la calculatrice 8 amènent, par le dispositif de commande 15, le distributeur 14 dans l'une ou l'autre des positions pour lesquelles il envoie la pression de l'accumulateur 11 dans l'une ou l'autre des chambres du vérin 10 en exerçant ainsi sur la rampe 1, pendant la durée du signal, un couple tendant à ramener la rampe à la position recherchée.

Dans le mode de réalisation de la figure 2, l'effort pour ramener la rampe 1 dans la position recherchée est exercé par un moteur électrique 16 à excitation séparée monté sur le châssis porteur 3 et qui entraine par une courroie 17 une poulie 18 solidaire de l'axe 2. Selon les caractéristiques connues du moteur électrique à excitation séparée, il n'exerce aucun couple lorsque l'excitation est nulle et le couple exercé est dans l'un ou l'autre sens selon le sens du courant d'excitation dans l'inducteur. L'inducteur du moteur 16 est alimenté par l'intermédiaire d'un inverseur contacteur à trois positions 20 dont l'organe de manoeuvre 21 est commandé par les signaux émis par la calculatrice 8.

Les modes de réalisation ci-dessus qui sont décrits à titre de simples exemples ne limitent pas l'invention, les moyens de détection de la position, les moyens pour exercer temporairement l'effort de rappel et les moyens pour contrôler ces derniers pouvant être choisis de façon quelconque parmi ceux connus, selon l'application envisagée.

### Revendications

1. Un procédé pour faire suivre à un élément (1) monté mobile selon au moins une composante de mouvement, sur un support (3) se déplaçant lui-même dans un repère fixe, une trajectoire recherchée définie dans ce repère fixe, procédé dans lequel on exerce, sur l'élément (1) et en fonction de sa position par rapport à la trajectoire recherchée, une ou des forces tendant à ramener l'élément (1) sur la trajectoire recherchée, cette ou ces forces étant fonction de l'écart entre la position de l'élément (1) et la position correspondant à la trajectoire recherchée, caractérisé en ce que l'élément (1) est monté dans une position d'équilibre indifférent par rapport à la ou aux composantes de mouvement selon lesquelles il est monté mobile sur le support (3) et en ce que les forces qui tendent à ramener l'élément (1) sur la trajectoire recherchée ont des intensités indépendantes de la position relative et des mouvements relatifs de l'élément (1) par rapport au support (3), ces forces qui suppriment l'état d'équilibre indifférent de l'élément (1) n'étant appliquées que lors de la détection d'un écart entre la position de l'élément (1) et la position correspondant à la trajectoire recherchée.

2. Un procédé de stabilisation d'un mobile suspendu selon la revendication 1, caractérisé en ce que la ou les forces qui tendent à ramener l'élément (1) sur la trajectoire recherchée sont des forces d'intensité quasi-constante dont la durée de mise en application est fonction de l'action à exercer sur l'élément (1) pour le ramener sur la trajectoire recherchée.

3. Un dispositif mettant en oeuvre le procédé de stabilisation selon l'une quelconque des revendications 1 et 2, comportant un élément (1) monté mobile selon au moins une composante de mouvement sur un support (3) se déplaçant lui-même selon une trajectoire rendant possible le suivi par l'élément de la trajectoire recherchée pour cet élément (1), ce dispositif comportant en combinaison et pour chaque composante de mouvement participant à la formation de la trajectoire réelle au moins un moyen (6) de mesure de la position instantanée, selon la direction de ladite composante de mouvement, de l'élément (1) par rapport à un élément de référence (4) indépendant du dispositif, une calculatrice programmée (8) qui reçoit des valeurs mesurées de ladite position instantanée, les compare aux valeurs théoriques correspondant à la trajectoire recherchée pour l'élément (1) et émet une sortie (9) fonction du résultat de cette comparaison et un moyen (10, 16 à 18) monté entre l'élément (1) et le support (3) et susceptible d'exercer sur l'élément (1) une force tendant à modifier sa position selon la direction du mouvement de ladite composante de mouvement, un moyen (14, 20) asservi à la sortie (9) émise par la calculatrice (8) mettant en action, en fonction de ladite sortie (9), ce moyen (10, 16 à 18) exerçant une force, caractérisé en ce que l'élément (1) est monté dans une position d'équilibre indifférent selon une ou des composantes de mouvement participant à la formation de la trajectoire réelle, le moyen (10, 16 à 18) n'exerçant une force sur l'élément mobile que lorsque la calculatrice (8) envoie au moyen (14, 20) asservi un signal de commande correspondant à un écart entre la position de l'élément (1) et la position correspondant à la trajectoire recherchée.

4. Un dispositif selon la revendication 3 appliqué à une rampe pulvérisatrice (1) montée à rotation libre autour d'une axe (2) porté par le châssis porteur de la rampe (1), ledit dispositif comportant au moins un détecteur (6) susceptible de mesurer la distance à laquelle il se trouve de la surface à pulvériser, ledit détecteur (6) étant monté sur ladite rampe (1) en étant écarté du plan longitudinal de la rampe (1) passant par son axe (2) d'articulation, les mesures de ce ou ces détecteurs (6) étant envoyées à une calculatrice programmée (8) qui effectue la comparaison des valeurs de distance mesurées aux valeurs théoriques correspondant au parallélisme de la rampe pulvérisatrice (1) avec la surface à pulvériser et émet un signal de commande (9) fonction du résultat de cette comparaison, un moyen (15, 21) étant asservi audit signal de commande (9) pour rendre actif le moyen (10, 16 à 18) susceptible d'exercer un couple sur ladite rampe (1) pour la faire tourner autour de l'axe (2), caractérisé en ce que l'axe (2) passe sensiblement par le centre de gravité de la rampe, le moyen (10, 16 à 18) laissant la rampe (1) libre d'osciller librement en dehors des périodes pendant lesquelles elle est soumise à l'action du moyen (10, 16 à 18) susceptible d'exercer un couple sur ladite rampe.

5. Un dispositif selon la revendication 4 dans lequel le moyen susceptible d'exercer un couple sur la rampe est constitué par un vérin double effet (10) articulé sur la rampe (1) et sur le châssis porteur (3) et associé à une source de fluide sous pression (11), le moyen asservi au signal de commande (9) étant un distributeur (14) à trois positions assurant, dans deux des positions, la mise en communication de la source de fluide sous pression (11) avec l'une ou l'autre des chambres du vérin (10), caractérisé en ce que, dans la troisième position, le distributeur (14) assure l'intercommunication entre les deux chambres du vérin.

6. Un dispositif selon la revendication 4, caractérisé en ce que le moyen susceptible d'exercer un couple sur la rampe est constitué par un moteur électrique (16) à excitation séparée monté sur le châssis porteur et dont l'arbre de sortie entraîne la rampe (1) autour de son axe (2), le moyen asservi à la commande étant un dispositif de régulation (20) de l'excitation de ce moteur.

**Patentansprüche**

1. Verfahren zum Führen eines mindestens mit einem Freiheitsgrad beweglich auf einem Träger (3), der sich in einem festen Bezugssystem bewegt, befestigten Element (1) entlang einer Bahn in diesem festen Bezugssystem definierten Bahn, wobei auf das Element (1) und in Funktion seiner Lage bezüglich der gewünschten Bahn eine oder mehrere Kräfte ausgeübt werden, die dahin tendieren, das Element (1) auf die gewünschte Bahn zurückzuführen, wobei die Kraft bzw. die Kräfte von dem Abstand zwischen der Lage des Elements (1) und der entsprechenden Lage der gewünschten Bahn abhängen, dadurch gekennzeichnet, daß das Element (1) in einer Lage eines indifferenten Gleichgewichts bezüglich der oder den Freiheitsgraden, mit denen es beweglich auf dem Träger (3) befestigt ist, angeordnet ist, und dadurch, daß die Kräfte, die das Element (1) auf die gewünschte Bahn zurückzuführen suchen Werte haben, die unabhängig von der Relativlage und den Relativbewegungen des Elements (1) bezüglich des Trägers (3) sind, wobei diese Kräfte, die den Zustand des indifferenten Gleichgewichts des Elements (1) aufheben, nur dann beaufschlagt werden, wenn ein Abstand zwischen der Lage des Elements (1) und der entsprechenden Lage der gewünschten Bahn festgestellt wird.

2. Verfahren nach Anspruch 1, dadurch gekennzeichnet, daß die Kraft bzw. die Kräfte, die das Element (1) auf die gewünschte Bahn zurückzuführen suchen quasi konstante Kräfte sind, deren Beaufschlagungsdauer von der Wirkungsdauer auf das Element (1) abhängen, die erforderlich ist um dieses auf die gewünschte Bahn zurückzuführen.

3. Vorrichtung zur Durchführung des Verfahrens nach einem der Ansprüche 1 und 2, mit einem mit mindestens einem Freiheitsgrad auf einem Träger (3) angebrachten Element (1), wobei der Träger (3) selbst sich entlang einer Bahn bewegt, die es ermöglicht, daß das Element (1) seiner vorgesehenen Bahn folgt, wobei diese Vorrichtung in Kombination und für jeden Freiheitsgrad, der an der Bildung der reellen Bahn teilnimmt aufweist: mindestens ein Organ (6) zur Messung der Istposition bezüglich der Ausrichtung des Freiheitsgrads, des Elements (1) bezüglich einem Bezugselement (4), das unabhängig von der Vorrichtung it, einem programmierten Rechner (8), der die Meßwerte der Istposition empfängt, diese mit theoretischen Werten vergleicht, die der gewünschten Bahn des Elements (1) entsprechen und der Ausgangssignale (9) in Abhängigkeit des Ergebnisses dieses Vergleichs liefert und ein Organ (10, 16—18), das zwischen dem Element (1) und dem Träger (3) angeordnet ist und auf das Element (1) eine Kraft ausüben kann, die dessen Lage entlang der Bewegungsrichtung gemäß dem Freiheitsgrad verändern kann, wobei ein durch die Ausgangssignale (9) des Rechners (8) gesteuertes Organ (14, 20) in Funktion dieser Ausgangssignale (9) das Organ (10, 16—18), das eine Kraft ausübt, betätigt, dadurch gekennzeichnet, daß das Element (1) in einer Lage des indifferenten Gleichgewichts bezüglich des Freiheitsgrades oder der Freiheitsgrade, die an der Bildung der reellen Bahn teilnehmen, angeordnet ist, wobei das Organ (10, 16—18) nur dann eine Kraft auf das bewegliche Element ausübt, wenn der Rechner (8) dem gesteuerten Organ (14, 20) ein entsprechendes Befehlssignal gibt, das im Abstand zwischen der Lage des Elements (1) und der entsprechenden Lage der gewünschten Bahn entspricht.

4. Vorrichtung nach Anspruch 3, angewendet auf einen Zerstäuberbalken (1), der frei drehbar um eine Achse (2) angeordnet ist, die von dem Trägerchassis des Balkens (1) getragen wird, wobei die Vorrichtung mindestens einen Detektor (6) aufweist, der den Abstand zwischen sich und der zu besprühenden Oberfläche messen kann, wobei dieser Detektor (6) auf dem Balken (1) angeordnet ist und von der Längs-Ebene des Balkens (1), die durch seine Drehachse (2) verläuft beabstandet ist, wobei die Meßwerte des Detektors (6) bzw. der Detektoren (6) einem programmierten Rechner (8) zugeführt werden, der den Vergleich der gemessenen Abstandswerte mit theoretischen Werten durchführt, die einer Parallelität des Zerstäuberbalkens (1) mit der zu besprühenden Oberfläche entspricht und der ein Steuersignal (9) in Abhängigkeit von dem Ergebnis dieses Vergleichs sendet, mit einem durch dieses Steuersignal gesteuerten Organ (15, 21) zur Aktivierung des Organs (10, 16—18), das ein Drehmoment auf den Balken (1) ausüben kann um dieses um die Achse (2) zu drehen, dadurch gekennzeichnet, daß die Achse (2) ungefähr durch den Schwerpunkt des Balkens verläuft und das Organ (10, 16—18) den Balken (1) frei oszillieren läßt außerhalb von Perioden, während deren der Balken der Einwirkung des Organs (10, 16—18) ausgesetzt ist, das ein Drehmoment auf den Balken ausüben kann.

5. Vorrichtung nach Anspruch 4, bei dem das Organ, das geeignet ist ein Drehmoment auf den Balken auszuüben aus einer doppelt wirkenden Kolbenzylindereinheit (10) besteht, die an dem Balken (1) und auf dem Trägerchassis (3) angelenkt ist und mit einer Druckfluidquelle (11) verbunden ist, wobei das durch das Steuersignal (9) betätigte Organ ein Dreistellungsverteiler (14) ist, der in zwei dieser Stellungen die Verbindung der Druckfluidquelle (11) mit einer der beiden Arbeitskammern der Kolbenzylindereinheit (10) gewährleistet, dadurch gekennzeichnet, daß in der dritten Stellung der Verteiler (14) die Verbindung zwischen den beiden Arbeitskammern der Kolbenzylindereinheit herstellt.

6. Vorrichtung nach Anspruch 4, dadurch gekennzeichnet, daß das Organ, das ein Drehmoment auf den Balken ausüben kann, aus einem Elektromotor (16) mit getrennter Speisung besteht, der auf dem Trägerchassis angeordnet ist und dessen Ausgangswelle eine Drehung des Balkens um seine Achse (2) bewirkt, wobei das durch das Steuersignal betätigte Organ eine Regelvorrichtung (20) der Motorspeisung ist.

**Claims**

1. A process for causing an element (1) movably mounted with at least one moving component on a support (3) which in turns moves in a fixed reference mark, to follow a selected trajectory defined in said fixed reference mark, a process in which there is exerted, on element (1) and as a function of its position with respect to the selected trajectory one or several forces tending to bring back element (1) on the selected trajectory, said one or several forces being a function of the deviation between the position of element (1) and the corresponding position of the selected trajectory, characterized in that element (1) is mounted in a position of indifferent equilibrium with respect to the one or several moving components according which it is movably mounted on support (3) and in that the forces which tend to bring element (1) back to the selected trajectory have intensities which are independent of the relative position and of the relative movements of element (1) with respect to support (3), said forces which suppress the state of indifferent equilibrium of element (1) being applied only when a detection is made of a deviation between the position of element (1) and the corresponding position of the selected trajectory.

2. A stabilizing process for a suspended mobile according to claim 1, characterized in that the one or several forces which tend to bring element (1) back on the selected trajectory are forces of an almost constant intensity, with a duration of implementation which is a function of the action to be exerted on element (1) in order to bring it back on the selected trajectory.

3. A device practicing the stabilizing process according to any one of claims 1 and 2, including an element (1) movably mounted with at least one moving component on a support (3) which in turn moves along a trajectory making possible the follow-up by the element of the selected trajectory for said element (1), said device including in combination and for each moving component taking part in the formation of the real trajectory at least a means (6) for measuring the instantaneous position, according to the direction of said moving component, of element (1) with respect to a reference element (4) independent of the device, a programmed calculator (8) which receives the measured values of said instantaneous position, compares them to theoretical values corresponding to the selected trajectory for element (1) and emits an output (9) which is a function of the result of said comparison, and a means (10, 16 to 18) mounted between element (1) and support (3) and adapted for applying on element (1) a force tending to modify its position according to the direction of movement of said moving component, a means (14, 20) servo-operated by the output (9) emitted by calculator (8) and setting in action, as a function of said output (9), said means (10, 16 to 18) exerting a force, characterized in that element (1) is mounted in a position of indifferent equilibrium with one or several moving components taking part in the formation of the real trajectory, means (10, 16 to 18) exerting a force on the mobile element only when calculator (8) applies to the servo-operated means (14, 20) a control signal corresponding to a deviation between the position of element (1) and the position corresponding to the selected trajectory.

4. A device according to claim 3, applied to a spraying boom (1) mounted so as to rotate freely about an axis (2) carried by the support frame of boom (1), said device including at least one sensor (6) adapted for measuring the distance separating it from the surface to be sprayed, said sensor (6) being mounted on said boom (1) and being spaced apart from the longitudinal plane of boom (1) passing through its articulation axis (2), the measurements of said one or several sensors (6) being used by a programmed calculator (8) which carries out the comparison between the measured distance values to the theoretical values corresponding to the parallelism of spraying boom (1) and the surface to be sprayed and emits a control signal (9) which is a function of the result of said comparison, a means (15, 21) being servo-operated by said control signal (9) for rendering active means (10, 16 to 18) adapted for exerting a torque on said boom (1) in order to rotate it about axis (2), characterized in that axis (2) passes substantially through the centre of gravity of the boom, the means (10, 16 to 18) leaving boom (1) to oscillate freely outside the periods during which it is subjected to the action of means (10, 16 to 18) adapted for exerting a torque on said boom.

5. A device according to claim 4, in which the means adapted for exerting a torque on the boom comprises a double action jack (10) articulated on boom (1) and on the support frame (3) and associated with a source of fluid under pressure (11), the means servo-operated by the control signal (9) being a three-way sliding valve (14) setting in communication, in two of its positions, the source of fluid under pressure (11) with one or the other of the chambers of jack (10), characterized in that in the third position, sliding valve (14) ensures the intercommunication between the two chambers of the jack.

6. A device according to claim 4, characterized in that the means adapted for exerting a torque on the ramp is made of an electric motor (16) with

13 **0 077 270** 14

separate energization, mounted on the support frame and having its output shaft driving ramp (1) about its axis (2), the means servo-operated by the control signal being a regulation device (20) for the energization of said motor.

*Fig.1*

*Fig.2*